Europäisches Patentamt

European Patent Office

Office européen des brevets

(19)

(11) **EP 1 693 136 A1**

## (12) EUROPEAN PATENT APPLICATION

(43) Date of publication:
**23.08.2006 Bulletin 2006/34**

(51) Int Cl.:
***B23D 59/00*** *(2006.01)*   ***B23Q 17/24*** *(2006.01)*

(21) Application number: **05024135.5**

(22) Date of filing: **04.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.02.2005 US 58930**

(71) Applicant: **Techtronic Industries Co., Ltd.**
**N.T. Hong Kong (CN)**

(72) Inventors:
• **Kwok Ting Mok**
 **Hong Kong (CN)**
• **Gautsch, Robert Edward**
 **Belton**
 **South Carolina 29627 (US)**

(74) Representative: **HOFFMANN EITLE**
**Patent- und Rechtsanwälte**
**Arabellastrasse 4**
**81925 München (DE)**

## (54) Alignment guide for a saw

(57) A saw includes a housing (12), a motor (16), a saw blade, a base plate (20), and an alignment guide (30). The motor is at least partially provided in the housing. The saw blade is driven by the motor and defines a cutting plane. The base plate supports the housing. The alignment guide is attached to the base plate and has a laser, a scale, and an indicator. The laser is selectively rotatable and projects a laser beam in a laser plane about a first axis. The scale is positioned about the first axis and has a plurality of first graduations. The indicator is aligned with the scale and indicates a horizontal offset distance between the cutting plane and the laser plane along the base plate.

FIG. 1

## Description

The present invention relates to a guide for a power tool, for example, an alignment guide for a saw, such as a circular saw.

A typical circular saw has a housing mounted to a base plate. A motor disposed in the housing powers a saw blade. The base plate typically has a notch to indicate the cutting plane as defined by the saw blade. In order to accurately make a cut, an operator typically scribes a line on a workpiece and aligns the notch with the line while cutting. In addition to the extra step of scribing a line, this method requires an operator to focus his eyes on the notch while cutting, leading to operator fatigue and potential errors as long lengths are cut.

Circular saws with laser alignment guides for more precise movement during cutting have been developed to address this problem. These guides, however, are typically fixed to an upper blade guard and project a laser line along the cutting plane. For operators who wish to make cuts at a given offset distance from a reference line, the operator is first required to scribe a line parallel to the reference line, and then make the cut.

U.S. Patent 5,461,790 to Olstowski discloses a laser guide for a circular saw having a rotatable disk that allows an operator to vary the angular orientation of the laser guide with respect to the cutting plane. Because the rotatable disk may slide along an adjustable groove in the upper blade guard, the use of such a rotatable disk, however, requires an operator to measure the distance between the projected laser line and the blade every time an offset distance is adjusted or the disk slides along the groove. In addition, because the laser guide is mounted on the upper blade guard, it is difficult to retrofit existing circular saws with such laser guides. Further, the position of the laser guide on the circular saw may interfere with the workpiece or other parts as cuts are made.

SUMMARY

Accordingly, embodiments of the present invention provide an alignment guide for a power tool. The alignment guide may be secured to the base plate or housing of a saw either integrally or attached as an accessory. Because the vertical distance between the axis of rotation of the alignment guide and the base plate is fixed, graduations that directly correspond to the horizontal offset distance may be placed on a scale or dial, allowing for quick adjustment and eliminating the need for an operator to determine the correlation between an angular adjustment and a given offset distance.

According to one aspect of the invention, a saw comprises a housing, a motor, a saw blade, a base plate, and an alignment guide. The motor is at least partially provided in the housing. The saw blade is driven by the motor and defines a cutting plane. The base plate supports the housing. The alignment guide is attached to the base plate and has a laser, a scale, and an indicator. The laser is selectively rotatable and projects a laser beam in a laser plane about a first axis. The scale is positioned about the first axis and has a plurality of first graduations. The indicator is aligned with the scale and indicates a horizontal offset distance between the cutting plane and the laser plane along the base plate.

According to another aspect of the invention, the vertical distance between the first axis and the base plate is fixed, and the first axis is substantially parallel to the cutting plane.

Yet another aspect of the invention provides a base plate that supports the housing such that the housing is rotatable about a first axis. The laser is selectively rotatable and projects a laser beam in a laser plane about a second axis. The vertical distance between the second axis and the base plate is fixed, and the second axis is substantially parallel to the cutting plane. The scale is positioned about the second axis and has a plurality of first graduations. The indicator is aligned with the scale and indicates a horizontal offset distance between the cutting plane and the laser plane along the base plate.

According to another aspect of the invention, the alignment guide is attached to the housing.

## BRIEF DESCRIPTION OF THE DRAWINGS

FIG. 1 shows a perspective view of the alignment guide of the present invention, shown mounted to a circular saw.

FIG. 1A is a detail view of the alignment guide of the present invention of FIG. 1.

FIG. 2 is a front view of the alignment guide of the present invention, shown mounted to a circular saw.

FIG. 3 is a side view of the alignment guide of the present invention, shown mounted to a circular saw.

FIG. 4 is a top view of the alignment guide of the present invention, shown mounted to a circular saw.

FIG. 5 is a perspective view of another embodiment of the alignment guide of the present invention, shown mounted to a circular saw.

FIG. 6 is a front view of the alignment guide of the present invention illustrated in FIG. 5, shown mounted to a circular saw.

FIG. 7 is a front view of the alignment guide of the present invention illustrated in FIG. 5, shown mounted to a circular saw at a bevel angle of forty-five degrees.

FIG. 8 is a detail view of the alignment guide of the present invention illustrated in FIG. 5.

FIG. 9 is a perspective view of another embodiment of the alignment guide of the present invention mounted to a jig saw.

FIG. 9A is a detail view of the alignment guide shown in FIG. 9.

FIG. 10 is a side view of the alignment guide shown in FIG. 9.

FIG. 11 is a front view of the alignment guide shown in FIG. 9.

DETAILED DESCRIPTION

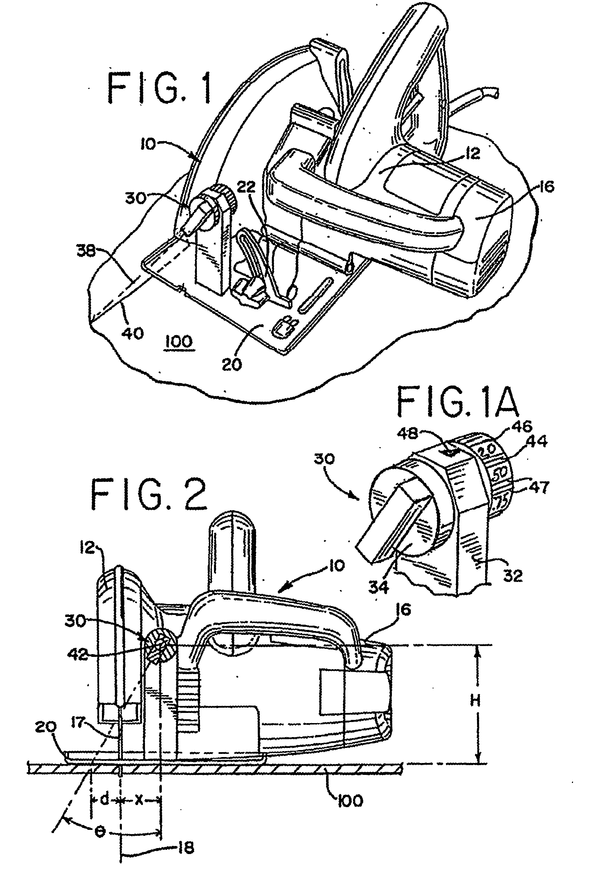

Referring now to FIGS. 1-4, an alignment guide 30 according to the present invention is shown mounted to a circular saw 10. The circular saw 10 includes a housing 12 mounted to a base plate 20. The housing 12 has a handle 13 and a trigger 14. The trigger 14 activates a motor 16 disposed within housing 12. The motor 16 rotates a saw blade 17 in the cutting plane 18 to cut the workpiece 100. As seen in FIG. 1, the circular saw 10 may also feature a bevel adjustment 22 that allows the housing 12 and the saw blade 17 to rotate with respect to the base plate 20, typically from 0 to 51.5 degrees. The base plate 20 has a blade guide notch 22 that is coplanar with the cutting plane 18 when the bevel angle is set to 0 degrees. Examples of such circular saws include the Ryobi® Model CSB131 7 1/4 inch 12 Amp Circular Saw or the Ryobi® Model R10631 K 18 Volt Cordless Circular Saw available from One World Technologies, Inc. of Anderson, South Carolina, United States of America, and the Craftsman® Model 11426 5 1/2 inch 19.2 Volt Cordless Trim Saw or the Craftsman® Model 11516 5 1/2 inch 19.2 Volt Cordless Trim Saw with Laser available from Sears, Roebuck, and Co. of Hoffman Estates, Illinois, United States of America.

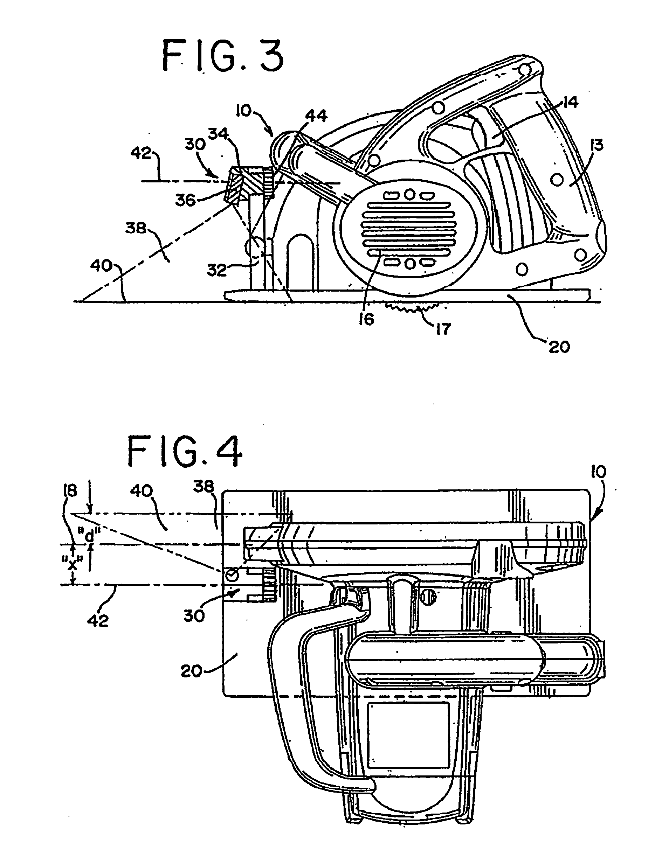

Referring to Figs. 1-4, the alignment guide 30 includes a support body 32, a laser housing 34, a laser generator 36, a dial 44, and an indicator 48. The support body 32 may be secured to the base plate 20 by screw or bolts (not shown), although other means of joining the two parts may be used, such as an adhesive, a snap or interference fit, etc. Alternately, the support body 32 may be integrally formed with the base plate 20. As seen in FIGS. 1A and 3, the laser housing 34 is rotatably attached to the support body 32 and adjustably rotates about an axis of rotation 42. The support body 32, laser housing 34, and dial 44 may be injection molded from a suitable plastic such as polycarbonate, acetal, or ABS (acrylonitrile-butadiene-styrene), although other materials may be used.

The laser generator 36 is disposed within the laser housing 34. The laser generator 36 may be a commercially available laser generator that produces a planar, fan shaped beam of light 38 that projects a laser line 40 onto the workpiece 100. Alternately, the laser generator 36 may be assembled separately from a commercially available laser diode (not shown), a collimating lens (not shown), and an optical element (not shown) such as a cylindrical lens, an opaque slit, or a holographic optical element. The laser generator 36 is secured to the laser housing 34 such that planar beam 38 is coplanar with the axis of rotation 42. The laser generator 36 may be adjustably secured to the laser housing 34 with set screws (not shown). Alternately, other known securing apparatus can be used to more easily facilitate the securing of the laser generator 36. For example, a rotatable handle or a cam having a lever or other apparatus suitable for securing the laser generator 40 can be used. In addition, the laser generator 36 may be permanently secured to the laser housing 34 through an adhesive, a snap or interference fit, etc.

The laser generator 36 may be powered through internal batteries (not shown) or an external power supply as desired. Alternately, the laser generator 36 may be powered directly from AC line current or through electrical cables connected to the electrical system of the circular saw 10. An AC to DC converter and voltage reducers may be required if AC line current is used, as is known. A power switch (not shown) allows power from a battery or other power source to actuate the laser generator 36. This switch may be integrally formed within the trigger 14, activating power to the laser generator 36 as the trigger 14 is partially depressed. Alternately, a separate switch may be used to independently control power to the laser generator 36.

The dial 44 is rotatably coupled with the laser generator 36, rotating about the axis of rotation 42. The dial 44 has a scale 46 that may include a series of numbered graduations 47 that run axially along the outer circumference of the dial 44. An indicator 48 is positioned on the support body 32 to indicate the degree of rotation of the dial 44 and the laser housing 34. The indicator 48 may be printed, stenciled, marked, scribed, drilled, cut, etched, stamped, molded, etc. into the support body 32. Alternately, the indicator 48 may be a separate piece, such as a label, mounted to the support body 32. As seen in FIG. 2, "H" is defined as the vertical distance between the axis of rotation 42 and the top surface of the workpiece 100 as the base plate 20 is resting on it. The angle "θ" is defined as the angle formed by the laser plane 38 and a vertical line extending from the axis of rotation 42. The horizontal distance between the cutting plane 18 and the axis of rotation 42 along base plate 20 is defined as "x". The horizontal offset distance measured from projected laser line 40 to the cutting plane 18 is designated as "d". Because the support body 32 fixes the axis of rotation 42 with respect to the base plate 20, the distance "H" is fixed. This fixed, known distance allows for graduations 47 to directly correspond to the horizontal offset distance "d," as seen in FIG. 1A. These graduations 47 may be directly expressed as a horizontal offset distance "d", rather than as an angle. At a zero reference point on the dial 44 that corresponds to an offset distance of zero, the projected laser line 40 is coplanar with the saw blade 17 and the cutting plane 18. Further offset distances may be calculated from the following formula:

$$\tan\theta = \frac{d+x}{H}$$

These offset distances may be expressed in inches, centimeters, or any other unit of linear measure.

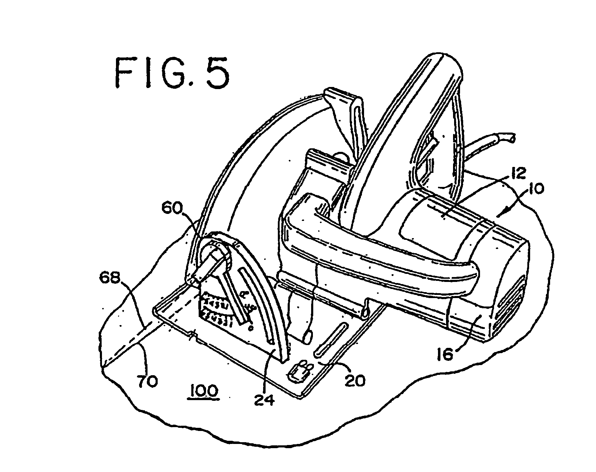

FIGS. 5-8 illustrate another embodiment of an alignment guide 60 mounted to the circular saw 10. In the embodiment shown in FIGS. 5-8, the support body 62 is integrally formed with the bevel adjustment 24. The laser housing 64 is rotatably attached to the support body 62 and rotates about an axis of rotation 72. A laser generator (not shown), disposed within the laser housing 64, produces a planar, fan shaped beam of light 68 which projects a laser line 70 onto the workpiece 100. Other aspects of the alignment guide 60 are similar to the alignment guide 30 shown in FIGS. 1-4 and described above.

A first scale 74 is formed on the support body 62. The first scale 74 may be printed, stenciled, marked, scribed, drilled, cut, etched, stamped, molded, etc. into the support body 62, or formed as a separate piece such as a label. An indicator 78 is formed as a projection that extends from the laser housing 64, sweeping along the first scale 74 as the laser housing 64 rotates about the axis of rotation 72. The radial graduations 75 on the first scale 74 that correspond to the offset distance may be calculated as described above for the alignment guide 30 shown in FIGS. 1-4.

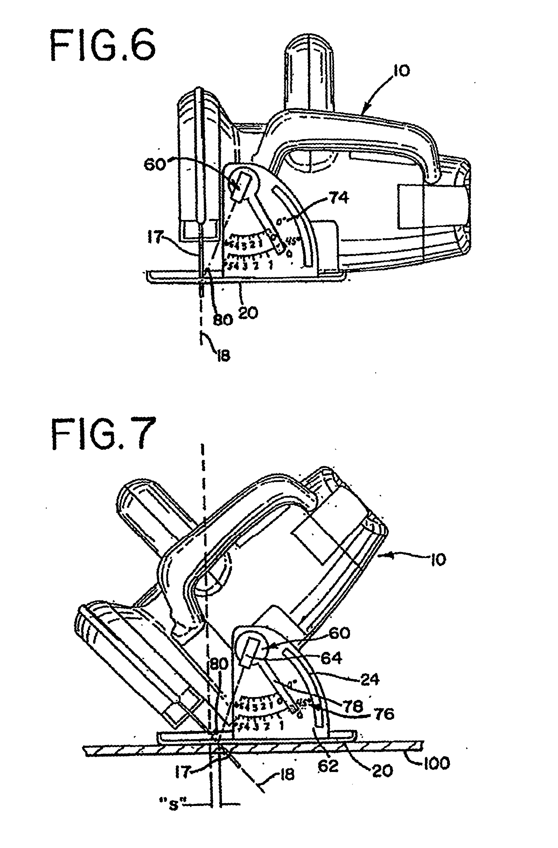

The first scale 74 and the indicator 78 accurately reflect offset distances for circular saws having a bevel angle of zero degrees. In addition, if a circular saw has an axis of bevel rotation 80 that coincides with the intersection of the cutting plane 18 and the workpiece 100, the first scale 74 will remain accurate. However, as seen in FIGS. 6-7, if a circular saw has an axis of bevel rotation 80 that is offset from the intersection of the cutting plane 18 and the workpiece 100, the cutting plane 18 will shift with respect to the alignment guide 60 and the axis of rotation 72. This offset requires an angular correction. As seen in FIGS. 5-8, a second scale 76 is provided concentrically with the first scale 74 on the support body 62, with radial graduations 77 having an angular offset "θ1" that corresponds to the offset distance "s." This angular offset "θ1" may be calculated from the following formula:

$$\theta 1 = \tan^{-1} \frac{s}{H}$$

The second scale 76 corresponds with a bevel angle of 45 degrees, although other bevel angles or additional scales corresponding to other bevel angles may be used by recalculating the angular offset due to the shift of the axis of bevel rotation 80.

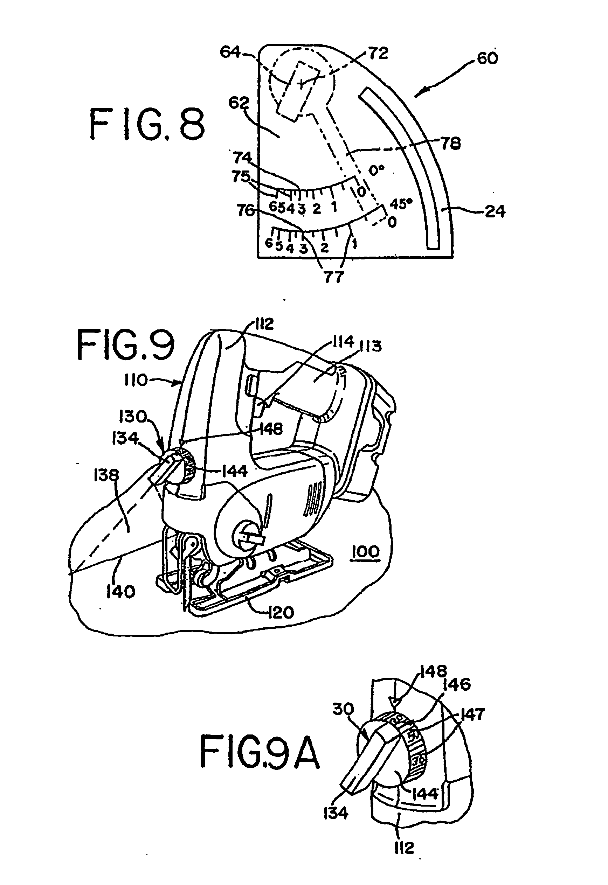

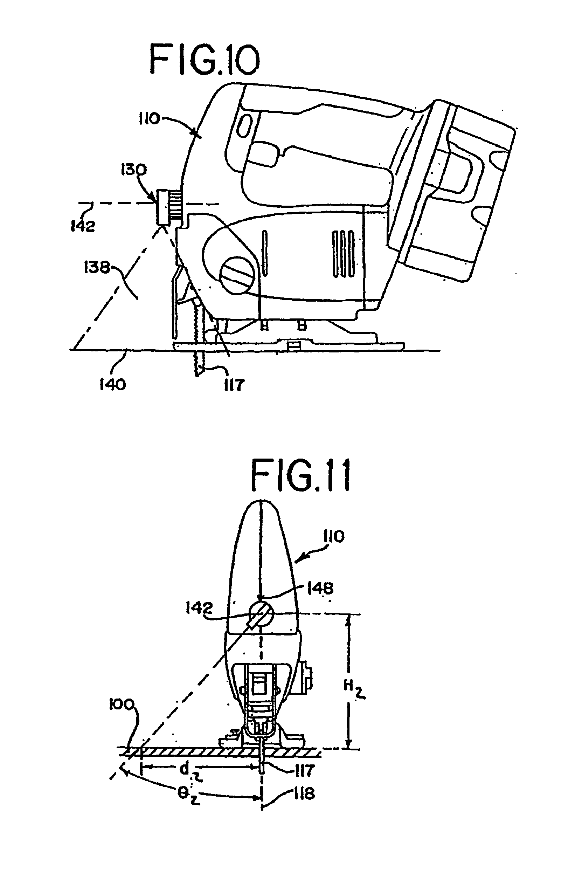

FIGS. 9-11 illustrate another embodiment of an alignment guide 130 shown mounted to a jig saw 110. Similar to the circular saw 10 described above, the jig saw 110 includes a housing 112 mounted to a base plate 120. The housing 112 has a handle 113 and a trigger 114. The trigger 114 activates a motor (not shown) disposed within housing 112. The motor oscillates a saw blade 117 (shown in FIGS. 10-11) in the cutting plane 118 to cut the workpiece 100. The jig saw 110 may also feature a bevel adjustment that allows the housing 112 and the saw blade 117 to rotate with respect to the base plate 120, typically from 0 to 45 degrees. Examples of such a jig saw include the Ryobi® Model OJ1802 18.0 Volt Cordless Orbital Jig Saw available from One World Technologies, Inc. of Anderson, South Carolina, United States of America, and the Craftsman® Model 11428 19.2 Volt Cordless Jig Saw available from Sears, Roebuck, and Co. of Hoffman Estates, Illinois, United States of America.

As seen in FIGS. 9-11, the alignment guide 130 is mounted to the jig saw housing 112, although it may alternately be mounted to the base plate 120. The alignment guide 130 includes a support body (not shown), a laser housing 134, a laser generator (not shown), a dial 144, and an indicator 148. The support body may be integrally formed with the housing 112. The laser housing 134 and dial 144 are rotatably attached to the housing 112 and adjustably rotate about an axis of rotation 142. The dial 144 has a scale 146 that may include of a series of numbered graduations 147 that run axially along the outer circumference of the dial 144. The indicator 148 is positioned on the housing 112 to indicate the degree of rotation of the dial 144 and the laser housing 134. The laser generator produces a planar, fan shaped beam of light 138 that projects a laser line 140 onto the workpiece 100. Other aspects of the alignment guide 130 are similar to the alignment guide 30 shown in FIGS. 1-4 and described above.

As seen in FIG. 11, "H2" is defined as the vertical distance between the axis of rotation 142 and the top surface of the workpiece 100 as the base plate 120 is resting on it. The angle "θ2" is defined as the angle formed by the laser plane 138 and a vertical line extending from the axis of rotation 142. The horizontal offset distance measured from projected laser line 140 to the cutting plane 118 is designated as "d2". Because the support body fixes the axis of rotation 142 with respect to the base plate 120, the distance "H2" is fixed. This fixed, known distance allows for graduations 147 to directly correspond to the horizontal offset distance "d2." These graduations 147 may be directly expressed as a horizontal offset distance "d2", rather than as an angle. At a zero reference point on the dial 144 that corresponds to an offset distance of zero, the projected laser line 140 is coplanar with the saw blade 117 and the cutting plane 118. Further offset distances may be calculated from the following formula:

$$\tan \theta 2 = \frac{d2}{H2}$$

These offset distances may be expressed in inches, centimeters, or any other unit of linear measure.

In operation, a switch (not shown) actuates the laser generator 40. A fan-shaped planar laser beam 38, 68, 138 is projected from the laser generator 40, and forms a projected laser line 40, 70, 140 on a workpiece 100. By rotating the dial 44, 144 or the indicator 78 to correspond with a desired offset distance as indicated by graduations 47, 75, 77, 147 an operator can shift the laser line 40, 70, 140 to a desired offset distance left or right from saw blade 17, 117. This allows an operator to accurately and quickly make cuts at a desired offset distance.

The present invention is applicable to power tools having a cutting plane of operation such as circular saws, jig saws, table saws, miter saws, reciprocating saws, band saws, routers, laminate trimmers, and scroll saws. While the invention has been described with reference to details of the illustrated embodiments, these details are not intended to limit the scope of the invention as defined in the appended claims. For example, while the alignment guide has been illustrated as using a laser generator, other light sources may be used, such as lamps, light emitting diodes, etc. In addition, a vernier-type device may be used to allow for finer graduations. Alternately, a transmission may be coupled with the dial or scale and laser housing to allow for a mechanical disadvantage, which increases the rotational sensitivity and permits finer graduations and adjustment. Further, other units of measure may be used on the graduations, such as rotational units such as degrees or linear units such as millimeters, etc. It is therefore intended that the foregoing detailed description be regarded as illustrative rather than limiting, and that it be understood that it is the following claims, including all equivalents, that are intended to define the spirit and scope of this invention.

## Claims

1. A saw comprising:

   a. a housing;
   b. a motor at least partially provided in the housing;
   c. a saw blade driven by the motor and defining a cutting plane;
   d. a base plate supporting the housing; and
   e. an alignment guide attached to the base plate and having:

      i. a selectively rotatable laser projecting a laser beam in a laser plane about a first axis;
      ii. a scale positioned about the first axis having a plurality of first graduations; and
      iii. an indicator aligned with the scale, wherein the indicator indicates a horizontal offset distance between the cutting plane and the laser plane along the base plate.

2. The saw of Claim 1, wherein the vertical distance between the first axis and the base plate is fixed, and wherein the first axis is substantially parallel to the cutting plane.

3. The saw of Claim 1 wherein the housing is pivotally attached to the base plate about a second axis.

4. The saw of Claim 1, wherein the scale is on an outer circumference of a dial.

5. The saw of Claim 1, wherein the plurality of first graduations are in inches, centimeters or millimeters.

6. The saw of Claim 3, wherein the second axis is substantially collinear with an intersection of the cutting plane and a bottom surface of the base plate.

7. The saw of Claim 3, wherein the second axis is not substantially collinear with an intersection of the cutting plane and a bottom surface of the base plate.

8. The saw of Claim 7, further comprising a second scale positioned about the first axis having a plurality of second graduations and wherein the plurality of first graduations are rotationally offset from the plurality of second graduations.

9. The saw of Claim 8, wherein the first scale and the second scale are positioned concentrically about the first axis.

10. A circular saw comprising:

    a. a housing;
    b. a motor at least partially disposed within the housing;
    c. a saw blade driven by the motor and defining a cutting plane;
    d. a base plate supporting the housing; and
    e. an alignment guide attached to the base plate and having:

       i. a selectively rotatable laser projecting a laser beam in a laser plane about a first axis, wherein the vertical distance between the first axis and the base plate is fixed, and wherein the first axis is substantially parallel to the cutting plane;
       ii. a scale positioned about the first axis having a plurality of first graduations; and
       iii. an indicator aligned with the scale, wherein the indicator indicates a horizontal offset distance between the cutting plane and the laser plane along the base plate.

11. The circular saw of Claim 10 wherein the housing is pivotally attached to the base plate about a second axis.

12. The circular saw of Claim 10, wherein the scale is on an outer circumference of a dial.

**13.** The circular saw of Claim 10, wherein the plurality of first graduations are in inches, centimeters or millimeters.

**14.** The circular saw of Claim 11, wherein the second axis is substantially collinear with an intersection of the cutting plane and a bottom surface of the base plate.

**15.** The circular saw of Claim 11, wherein the second axis is not substantially collinear with an intersection of the cutting plane and a bottom surface of the base plate.

**16.** The circular saw of Claim 15, further comprising a second scale positioned about the first axis having a plurality of second graduations and wherein the plurality of first graduations are rotationally offset from the plurality of second graduations.

**17.** A circular saw comprising:

    a. a housing;
    b. a motor at least partially provided in the housing;
    c. a saw blade driven by the motor and defining a cutting plane;
    d. a base plate supporting the housing, wherein the housing is rotatable about a first axis; and
    e. an alignment guide attached to the base plate and having:

        i. a selectively rotatable laser projecting a laser beam in a laser plane about a second axis, wherein the vertical distance between the second axis and the base plate is fixed, and wherein the second axis is substantially parallel to the cutting plane;
        ii. a scale positioned about the second axis having a plurality of first graduations; and
        iii. an indicator aligned with the scale, wherein the indicator indicates a horizontal offset distance between the cutting plane and the laser plane along the base plate.

**18.** The circular saw of Claim 17, wherein the first axis is not substantially collinear with an intersection of the cutting plane and a bottom surface of the base plate.

**19.** The circular saw of Claim 18, further comprising a second scale positioned about the second axis having a plurality of second graduations and wherein the plurality of first graduations are rotationally offset from the plurality of second graduations.

**20.** The circular saw of Claim 19, wherein the first scale and the second scale are positioned concentrically about the second axis.

**21.** A saw comprising:

    a. a housing;
    b. a motor at least partially provided in the housing;
    c. a saw blade driven by the motor and defining a cutting plane;
    d. a base plate supporting the housing; and
    e. an alignment guide attached to the housing and having:

        i. a selectively rotatable laser projecting a laser beam in a laser plane about a first axis;
        i. a scale positioned about the first axis having a plurality of first graduations; and
        iii. an indicator aligned with the scale, wherein the indicator indicates a horizontal offset distance between the cutting plane and the laser plane along the base plate.

**22.** The saw of Claim 21, wherein the vertical distance between the first axis and the base plate is fixed, and wherein the first axis is substantially parallel to the cutting plane.

**23.** The saw of Claim 21 wherein the housing is pivotally attached to the base plate about a second axis.

**24.** The saw of Claim 21, wherein the scale is on an outer circumference of a dial.

**25.** The saw of Claim 21, wherein the plurality of first graduations are in inches, centimeters or millimeters.

**26.** The saw of Claim 23, wherein the second axis is substantially collinear with an intersection of the cutting plane and a bottom surface of the base plate.

**27.** The saw of Claim 23, wherein the saw is a jig saw.

FIG. 1

FIG.1A

FIG. 2

# FIG. 3

# FIG. 4

8

FIG. 5

# FIG.6

# FIG.7

FIG. 8

FIG.9

FIG.9A

EP 1 693 136 A1

# FIG.10

# FIG.11

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 41 08 710 A1 (ROBERT BOSCH GMBH, 7000 STUTTGART, DE) 17 September 1992 (1992-09-17) | 1,2,4,5, 10,12, 13,21, 22,24,25 | INV. B23D59/00 B23Q17/24 |
| Y | * column 1, line 66 - column 2, line 15 * <br><br> * column 3, line 27 - line 62 * <br> * column 4, line 37 - line 40; figures 4-7 * | 3,6-9, 11, 14-20, 23,26,27 | |
| Y | US 4 589 208 A (IWASAKI ET AL) 20 May 1986 (1986-05-20) <br><br> * column 3, line 26 - column 6, line 17; figure 10 * | 3,6,11, 14,17, 18,23, 26,27 | |
| Y | DE 39 22 849 A1 (KARL M. REICH MASCHINENFABRIK GMBH, 7440 NUERTINGEN, DE) 24 January 1991 (1991-01-24) <br><br> * the whole document * | 3,7-9, 11, 15-17, 19,20,23 | TECHNICAL FIELDS SEARCHED (IPC) B23D B23Q |

The present search report has been drawn up for all claims

| Place of search | Date of completion of the search | Examiner |
|---|---|---|
| Munich | 11 May 2006 | Frisch, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 02 4135

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2006

| Patent document cited in search report | | Publication date | Patent family member(s) | | Publication date |
|---|---|---|---|---|---|
| DE 4108710 | A1 | 17-09-1992 | EP | 0504745 A1 | 23-09-1992 |
| | | | JP | 5069346 A | 23-03-1993 |
| US 4589208 | A | 20-05-1986 | DE | 3429095 A1 | 28-02-1985 |
| | | | JP | 1682399 C | 31-07-1992 |
| | | | JP | 3038962 B | 12-06-1991 |
| | | | JP | 60040202 A | 02-03-1985 |
| DE 3922849 | A1 | 24-01-1991 | AT | 148790 A | 15-02-1994 |
| | | | CH | 682057 A5 | 15-07-1993 |

EPO FORM P0459

For more details about this annex : see Official Journal of the European Patent Office, No. 12/82